# EUROPEAN PATENT SPECIFICATION

(11) **EP 2 184 893 B1**
(45) Date of publication and mention of the grant of the patent: **03.09.2014**
(21) Application number: 08783829.8
(22) Date of filing: 31.07.2008
(51) Int. Cl.: H04L 12/28, H04L 29/06

(54) **METHOD, SYSTEM AND APPARATUS FOR QUICK SWITCHING MEDIA SOURCE**
VERFAHREN, SYSTEM UND VORRICHTUNG ZUR SCHNELLUMSCHALTUNG VON MEDIENQUELLEN
PROCÉDÉ, SYSTÈME ET APPAREIL POUR UNE COMMUTATION RAPIDE DE SOURCE MULTIMÉDIA

(30) Priority: 01.08.2007 CN 200710143459
(43) Date of publication of application: 12.05.2010
(73) Proprietor: Huawei Technologies Co., Ltd., Longgang District, Shenzhen Guangdong 518129 (CN)
(72) Inventor: YANG, Jian, Shenzhen Guangdong 518129 (CN); CHEN, Guoqiao, Shenzhen Guangdong 518129 (CN); WANG, Lei, Shenzhen Guangdong 518129 (CN)
(74) Representative: Epping, Wilhelm
(86) International application number: PCT/CN2008/071836
(87) International publication number: WO 2009/015611

(56) References cited:
- WO-A1-2006/066889
- WO-A1-2006/084503
- WO-A1-2007/068139
- CN-A- 101 083 605
- "3rd Generation Partnership Project; Technical Specification Group Services and System Aspects; Transparent end-to-end Packet-switched Streaming Service (PSS); Protocols and codecs (Release 7)", 3GPP STANDARD; 3GPP TS 26.234, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.3.0, 1 June 2007 (2007-06-01), pages 1-148, XP050370119,

## Description

### FIELD OF THE INVENTION

The present invention relates to the field of communications technology, and more particularly, to a fast switching method, apparatus, and system for media source.

### BACKGROUND

Along with the development of computer networks and the ever increasing requirements of people for information diversity, the application of multimedia technology becomes more and more popular. In a broad sense, the multimedia technology is a general term of a series of technologies, methods, and protocols for forming audio and video into stable and continuous transmission streams and playback streams. In a narrow sense, the multimedia technology only refers to a new technology adapted to issue multimedia data streams on an Internet Protocol (IP) network. Different from the conventional playback technology, the multimedia technology adopts a streaming transmission mode. That is, the whole multimedia file is divided into several compressed packets through a special compression method, and a video server sends the compressed packets to a user computer continuously and in real time, so the user may decompress and play back the packets sent previously while downloading the subsequent packets without waiting for the completion of the downloading. Therefore, the start delay is significantly reduced, and the demand for the buffer capacity of the system is greatly reduced as well.

The multimedia refers to a media format for playing in the Internet through streaming transmission. The implementation of streaming transmission needs an appropriate transport protocol, and currently, the protocols supporting the multimedia transmission mainly include a Real-time Transport Protocol (RTP), a Real-time Transport Control Protocol (RTCP), a Real-time Streaming Protocol (RTSP), and a Resource Reserve Protocol (RSVP).

The RTSP is jointly proposed by Real Networks and Netscape, and this protocol defines how a pair of multi-application programs effectively transmits multimedia data through the IP network. In the architecture, the RTSP runs on top of the RTP and RTCP, and finishes the data transmission through Transmission Control Protocol (TCP) or RTP. Compared with Hypertext Transfer Protocol (HTTP), the HTTP transmits Hypertext Markup Language (HTML), while the RTP transmits the multimedia data. An HTTP request is sent by a user equipment, and responded to by a server; when using the RTSP, both the user equipment and the server can send a request, so the RTSP may be bi-directional. The RTSP protocol is an application-level protocol for control over the delivery of multimedia data with real-time properties. The RTSP provides an extensible framework to enable controlled, on-demand delivery of real-time data (such as audio and video). Sources of data can include both live data feeds and stored clips. This protocol is intended to control multiple data delivery sessions, provide a means for choosing delivery channels such as User Datagram Protocol (UDP), multicast UDP and TCP, and provide a means for choosing delivery mechanisms based upon RTP. The RTSP may establish and control either a single or several time-synchronized streams of continuous media. The protocol does not typically deliver the continuous streams, although interleaving of the continuous media stream with the control stream is possible. In other words, the RTSP acts as a "network remote control" for multimedia servers.

In the conventional art, the multimedia is mainly implemented by finishing the control over the multimedia through the RTSP protocol, and finishing the delivery of the media stream through the RTP/RTCP protocol. In the RTSP protocol, the function of session establishment is finished through Describe and Setup methods, and the function of multimedia session control is performed through Play, Pause, and Teardown methods. A multimedia session process mainly includes multimedia discovery, multimedia session establishment, media session control, media transport resource establishment, and other processes. The session establishment process takes a period of time, that is to say, it takes some time for the user to normally view the multimedia after finding the multimedia. If the user wants to perform multimedia source switching during the playback of the multimedia, the current session needs to be torn down to release the current session and media communication channel resources, and reestablish a new session with the multimedia server. This means that a lengthy switching process is taken to release the current session resources and reestablish the new session. Therefore, the time taken by the media source switching operation is rather long.

Patent publication document WO2006/084503A1 discloses a solution for switching between channels which belong to one on-demand multi-channel streaming session. In this solution, an aggregated channel bundle session description is provided which includes a channel bundle in which each channel is described by means of a unique channel identifier.

"3rd Generation Partnership Project; Technical Specification Group Services and System Aspects; Transparent end-to-end Packet-switched Streaming Service (PSS); Protocols and codecs (Release 7)", 3GPP STANDARD; 3GPP TS 26.234, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. V7.3.0.1 June 2007 (2007-06-01), pages 1-148, XP050370119 discloses content switching either with or without available SDP (pages 46 to 45, Annex M, D2).

US patent application publication US2008/0107108A1 discloses a communication system including a network element called streaming switching processor (SSP) located between the players and the video-server/video-encoders for executing the switching of the streaming contents upon a command received from the player.

During the implementation of the present invention, the inventor found that the conventional art at least has the following problems.

The security and reliability in performing fast media source switching according to the conventional art is low. The user has to wait for a long time when performing media source switching, resulting in a poor user experience.

### SUMMARY OF THE INVENTION

Accordingly, the present invention is directed to a fast switching method, apparatus, and system for media source, so as to solve the problem in the conventional art that the user has to wait for a long time when performing the media source switching operation.

In order to achieve the above objective, the present invention provides a fast switching method for media source, which includes the following steps: receiving, by a multimedia server, request information for performing media source switching from a user equipment; determining, by the multimedia server, whether the request information is valid or not, wherein the determining whether the request information is valid or not comprises: determining whether a current session corresponding to the request information exists or not, and the request information is determined as valid if the current session exists; stopping, by the multimedia server, playing back the current media source according to the request information, switching, by the multimedia server, a current media source to a target media source requested by the user equipment according to the request information, and delivering the target media source to the user equipment through the current session and media communication channel resources, if the request information is valid; returning, by the multimedia server, the request information if the request information is invalid.

The present invention further provides a fast switching system for media source, which includes a multimedia server and a user equipment. The user equipment is adapted to generate request information for performing media source switching, and send the request information to the multimedia server. The multimedia server is adapted to determine whether the request information is valid or not; stop playing back the current media source according to the request information wherein the determining whether the request information is valid or not comprises: determining whether a current session corresponding to the request information exists or not, and the request information is determined as valid if the current session exists, switch a current media source to a target media source requested by the user equipment according to the request information, and deliver the target media source to the user equipment through the current session and media communication channel resources, if the request information is valid; return the request information if the request information is invalid.

The present invention further provides a multimedia server, which includes a request receiving module, a request determining module, a media source switching module, and a media source information delivering module. The request receiving module is adapted to receive request information for performing media source switching from a user equipment. The request determining module is adapted to determine whether the request information received by the request receiving module is valid or not, and notify the media source switching module to perform media source switching after determining that the request information is valid. The request determining module (12) comprises a current session determining sub-module (121), adapted to determine whether a current session corresponding to the request information exists or not, and the request information is determined as valid if the current session exists. The media source switching module is adapted to switch a current media source to a target media source requested by the user equipment according to the request information received by the request receiving module. The media source information delivering module is adapted to deliver the target media source switched by the media source switching module to the user equipment through the current session and media communication channel resources.

Compared with the conventional art, the present invention has the following advantages.

In the present invention, after the user equipment sends the request information for performing media source switching to the multimedia server, the current session and the media communication channel resources between the multimedia server and the user equipment are not released, and the multimedia server delivers the target media source requested by the user equipment through the current session and the media communication channel resources, so that the time taken by the media source switching operation of the user equipment is greatly reduced, and thus the user experience is improved.

### BRIEF DESCRIPTION OF THE DRAWINGS

FIG. 1 is a structural view of a fast switching system for media source according the present invention;
FIG. 2 is a flow chart of a fast switching method for media source according to the present invention;
FIG. 3 is a flow chart of a fast switching method for media source according to a first embodiment of the present invention; and
FIG. 4 is a flow chart of a fast switching method for media source according to a second embodiment of the present invention.

### DETAILED DESCRIPTION OF THE EMBODIMENTS

The present invention provides a fast switching method, system, and apparatus for media source. In the present invention, a user equipment sends request information for performing media source switching to a multimedia server; and the multimedia server switches a current media source to a target media source requested by the user equipment according to the request information of the user equipment, and meanwhile reserves a current session and media communication channel resources between the multimedia server and the user equipment, and delivers the target media source requested by the user equipment through the current session and the media communication channel resources between the multimedia server and the user equipment. Through the present invention, the time taken by the user equipment to establish a session with the multimedia server and release and reestablish the media communication channel resources is saved, so that the time taken by the media source switching operation of the user equipment is greatly reduced, and thus the user experience is improved.

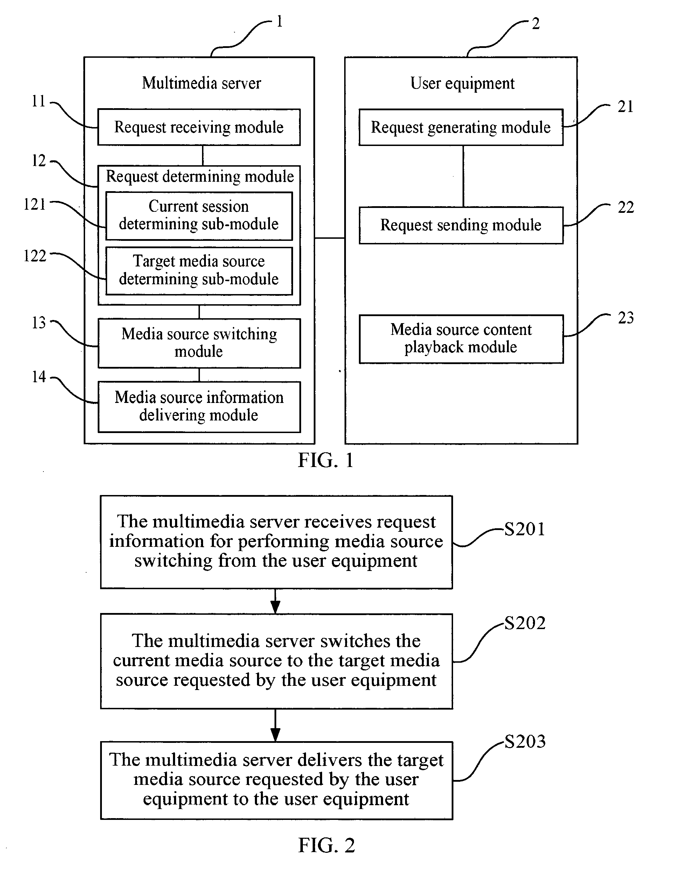

FIG. 1 is a structural view of a fast switching system for media source according to the present invention. Referring to FIG. 1, the system includes a multimedia server 1 and a user equipment 2. The multimedia server 1 receives request information for performing media source switching from the user equipment 2 and then determines whether the request information is valid or not. The method for determining whether the request information is valid or not may include: determining whether a current session corresponding to the request information exists or not, determining whether a target media source requested to be switched to exists or not, or determining whether a necessary parameter of the target media source is valid or not. If it is determined that the request information is valid, the multimedia server 1 switches a current media source to a target media source requested by the user equipment 2 according to the request information, and meanwhile reserves a session and media communication channel resources between the multimedia server 1 and the user equipment 2, and delivers the target media source requested by the user equipment 2 to the user equipment 2 through the current session and the media communication channel resources. If the multimedia server 1 determines that the request information is invalid, the multimedia server 1 returns the request. The user equipment 2 is adapted to generate the request information for performing media source switching, and deliver the request information to the multimedia server 1 through an RTSP protocol. After the request information is determined by the multimedia server 1 as valid, the user equipment 2 receives and plays back content of the target media source delivered by the multimedia server 1.

The multimedia server 1 includes a request receiving module 11, a media source switching module 13, and a media source information delivering module 14. The request receiving module 11 is adapted to receive the request information for performing media source switching sent by the user equipment 2. The request information includes an address or media flag of the target media source that the user equipment 2 requests to switch to, for example, a media flag representing a previous channel or a next channel. The media source switching module 13 is adapted to switch the current media source to the target media source requested by the user equipment 2 according to the request information after a request determining module 12 determines that the request information is valid, and reserves the current session and the media communication channel resources between the multimedia server 1 and the user equipment 2. The media source information delivering module 14 is adapted to deliver the target media source requested by the user equipment 2 to the user equipment 2 through the current session and the media communication channel resources.

Preferably, the multimedia server 1 further includes a request determining module 12, which is adapted to determine whether the request information received by the request receiving module 11 is valid or not. The method for determining whether the request information is valid or not may include: determining whether the current session corresponding to the request information exists or not, determining whether the target media source requested to be switched to exists or not, or determining whether a necessary parameter of the target media source is valid or not. If the request determining module 12 determines that the request information is invalid, the multimedia server 1 returns the request. For example, if the request determining module 12 determines that the target media source requested to be switched to in the request information does not exist, the multimedia server 1 returns the request to the user equipment 2.

The request determining module 12 includes a current session determining sub-module 121, which is adapted to determine whether the current corresponding to the request information exists or not, and if yes, the multimedia server 1 proceeds to the next operation; otherwise, the multimedia server 1 returns the request.

Preferably, the request determining module 12 further includes a target media source determining sub-module 122, which is adapted to determine whether the target media source that the user equipment 2 requests to switch to exists or not, and determine whether a necessary parameter of the target media source is valid or not. The necessary parameter includes an address or media flag of the target media source requested to be switched to, for example, a media flag representing a previous channel or a next channel. If the target media source exists and the necessary parameter is valid, the multimedia server 1 proceeds to the next operation, and if the target media source does not exist or the necessary parameter thereof is invalid, the multimedia server 1 returns the request.

The user equipment 2 includes a request generating module 21, a request sending module 22, and a media source content playback module 23. The request generating module 21 is adapted to generate request information for performing media source switching when the user performs the media source switching operation. The request information uses an operation flag header field constructed through the RTSP protocol to represent that the user is performing the media source switching operation, and meanwhile carries the address or media flag of the target media source requested to be switched to, for example, the media flag representing a previous channel or a next channel. The request sending module 22 is adapted to send the request information generated by the request generating module 21 to the multimedia server 1. The media source content playback module 23 is adapted to receive and play back the content of the target media source delivered by the multimedia server 1.

FIG. 2 is a flow chart of a fast switching method for media source according to the present invention. Referring to FIG. 2, the method includes the following steps.

In Step S201, a multimedia server receives request information for performing media source switching from a user equipment. When the user performs the media source switching operation, the user equipment constructs an operation flag header field through the RTSP protocol to represent that the user is performing the media source switching operation, and meanwhile the request information carries an address or media flag of a target media source requested to be switched to, for example, a media flag representing a previously channel or a next channel. The user equipment sends the generated request information to the multimedia server.

In Step S202, the multimedia server switches a current media source to a target media source requested by the user equipment. After receiving the request information for performing media source switching sent by the user equipment, the multimedia server first determines whether the request information is valid or not. The method for determining whether the request information is valid or not may include: determining whether the current session corresponding to the request information is valid or not, determining whether the target media source requested to be switched to exists or not, or determining whether a necessary parameter of the target media source is valid or not. If the multimedia server determines that the request information is valid, the multimedia server switches the current media source to the target media source requested by the user equipment according to the request information. If the multimedia server determines that the request information is invalid, the multimedia server returns the request.

In Step S203, the multimedia server delivers the target media source requested by the user equipment to the user equipment. When the multimedia server receives the request information for performing media source switching sent by the user equipment, the multimedia server reserves, rather than releases, the current session and media communication channel resources between the multimedia server and the user equipment; and after the multimedia server determines that the request information is valid and switches the current media source to the target media source requested by the user equipment, the multimedia server delivers the target media source requested by the user equipment to the user equipment through the current session and the media communication channel resources.

The present invention realizes the fast switching operation for media sources. In the present invention, the user equipment sends the request information for performing media source switching to the multimedia server, and the multimedia server switches the current media source to the target media source requested by the user equipment according to the request information, and meanwhile reserves the current session and the media communication channel resources between the multimedia server and the user equipment, and delivers the target media source requested by the user equipment to the user equipment through the current session and the media communication channel resources between the multimedia server and the user equipment. Therefore, the time taken from the start of the media source switching operation of the user equipment to the success of the switching is much shorter than the time taken by the media source switching operation in the conventional art, thus improving the user experience.

The present invention is further described through specific embodiments and with reference to the accompanying drawings.

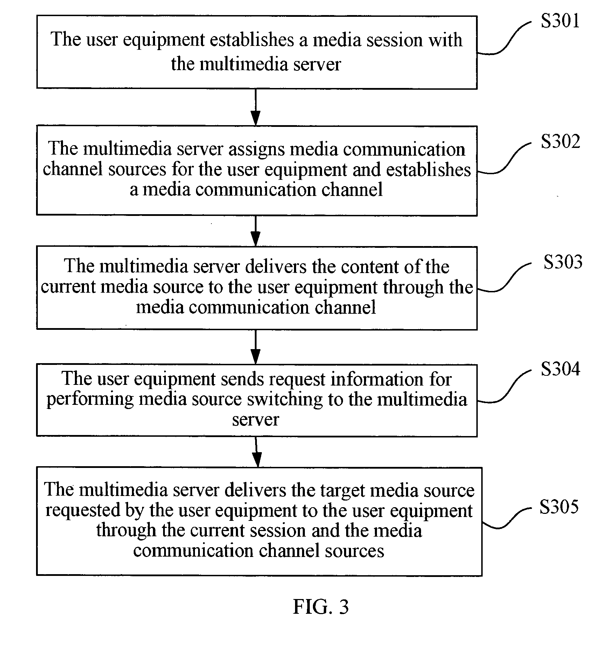

FIG. 3 is a flow chart of a fast switching method for media source according to a first embodiment of the present invention. Referring to FIG. 3, the method includes the following steps.

In Step S301, a user equipment establishes a normal media session with a multimedia server, requests to play back the content of a current media source. In the RTSP protocol, the media session between the user equipment and the multimedia server is established through a Describe method.

In Step S302, the multimedia server assigns media communication channel resources for the user equipment and establishes a media transport channel. In the RTSP protocol, the multimedia server assigns the media communication channel resources for the user equipment through a Setup method, so as to set up an RTSP connection.

In Step S303, the multimedia server delivers the content of the current media source through the media transport channel.

In Step S304, the user equipment sends request information for performing media source switching to the multimedia server. When the user performs the media source switching operation, the user equipment constructs an operation flag header field through the RTSP protocol to represent that the user is performing the media source switching operation, and meanwhile the request information carries an address or media flag of a target media source requested to be switched to, for example, a media flag representing a previous channel or a next channel.

For example, the manner of carrying an extension header field by using an Options method in the RTSP is as follows.
OPTIONS rtsp://audio.example.com/happy/audiol.en RTSP/1.0
Cseq:2
Session: 12345678
Range:smpte = 0:10:00-
TagChannel: rtsp://audio.example.com/twister/audio21.en
(or TagChannel:Next)

The extension header field TagChannel indicates a uniform resource identifier (URI) of a new media requested by the user, and the value may be a specific URI, or a media flag representing a next or previous channel indicated by Next or Previous.

This extension header field may be carried through the Options method, or through a SET_PARAMETER method.

For example, the manner of carrying the extension header field by using the SET_PARAMETER method in the RTSP protocol is as follows.
SET_PARAMETER rtsp://audio.example.com/happy/audiol.en RTSP/1.0
Cseq:2
Session: 12345678
Range: smpte = 0:10:00-
TagChannel: rtsp://audio.example.com/twister/audio21.en
(or TagChannel:Next)

In addition to the above two methods, this step may also be realized by an extension method in the RTSP. For example, the target media source that the user intends to switch to from the current media source is represented by using an EXCHANGE extension method, as shown below.
EXCHANGE rtsp://audio.example.com/happy/audio2.en RTSP/1.0
Cseq:2
Session: 12345678
Range: smpte = 0:10:00-
or
EXCHANGE next RTSP/1.0
Cseq:2
Session: 12345678
Range: smpte = 0:10:00-

In Step S305, the multimedia server delivers the target media source requested by the user equipment to the user equipment through the current session and the media communication channel resources. After the multimedia server receives the request information for performing media source switching sent by the user equipment, the multimedia server switches the current media source to the target media source requested by the user equipment, but does not release the current session and the media communication channel resources between the multimedia server and the user equipment, and then delivers the target media source requested by the user equipment to the user equipment through the current session and the media communication channel resources.

In the above fast switching method for media source, the user equipment generates the request information for performing media source switching by using the Options method, SET_PARAMETER method, and RTSP extension method in the RTSP protocol, and then sends the request information to the multimedia server; and the multimedia server switches the current media source to the target media source requested by the user equipment according to the request information, and delivers the target media source through the current session and the media communication channel resources, so that the time for releasing and reestablishing the session and the media communication channel resources between the user equipment and the multimedia server is saved.

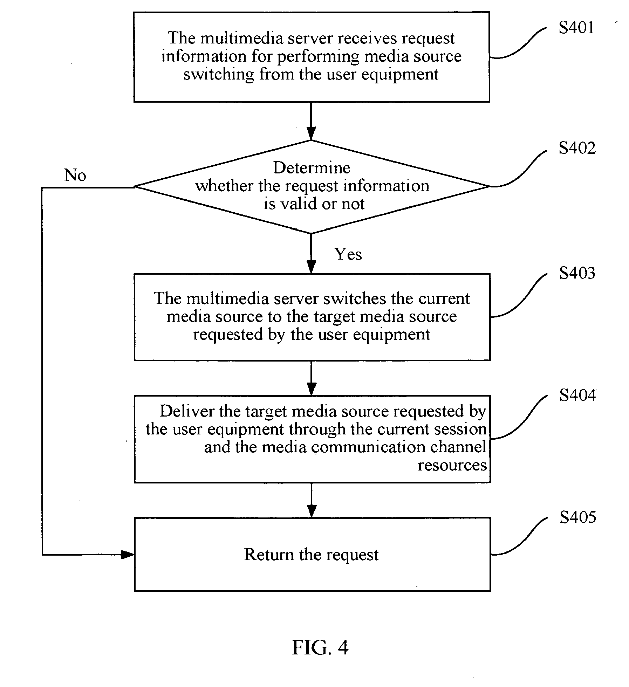

FIG. 4 is a flow chart of a fast switching method for media source according to a second embodiment of the present invention. Referring to FIG. 4, after a multimedia server receives request information for performing media source switching sent by a user equipment, the procedure of processing the request information includes the following steps.

In Step S401, the multimedia server receives the request information for performing media source switching sent by the user equipment. The request information includes an address or media flag of a target media source that the user equipment requests to switch to, for example, a media flag representing a previous channel or a next channel.

In Step S402, the multimedia server determines whether the received request information is valid or not. The method for determining whether the received request information is valid or not may include: determining whether a current session corresponding to the request information exists or not, determining whether the target media source requested to be switched to exists or not, or determining whether necessary parameter of the target media source is valid or not. If the multimedia server determines that the request information is valid, the procedure proceeds to Step S403; and if the multimedia server determines that the request information is invalid, the procedure proceeds to Step S405 to return the request.

In Step S403, the multimedia server switches a current media source to the target media source requested by the user equipment, but does not release the current session and media communication channel resources between the multimedia server and the user equipment.

In Step S404, the multimedia server delivers the target media source requested by the user equipment to the user equipment through the current session and the media communication channel resources.

In Step S405, the multimedia server returns the request.

In the fast switching method for media source according to the present invention, after the multimedia server receives the request information for performing media source switching sent by the user equipment, the multimedia server first determines whether the request information is valid or not, and if the request information is valid, the multimedia server switches the current media source to the target media source requested by the user equipment according to the request information, and delivers the target media source through the current session and the media communication channel resources, so that the time taken by the media source switching operation of the user equipment is greatly reduced, and thus the user experience is improved.

Through the above description in the detailed description, it is clear to those skilled in the art that the present invention may be accomplished through hardware, or through software plus necessary universal hardware platform. Base on this, the technical solutions of the present invention may be embodied in the form of a software product. The software product may be stored in one or more nonvolatile storage media (for example, CD-ROM, USB flash drive, or removable hard disk) and contain several instructions adapted to instruct a computer equipment (for example, a personal computer, a server, or a network equipment) to perform the method according to the embodiments of the present invention.

## Claims

1. A fast switching method for media source, comprising:
receiving (S401), by a multimedia server (1), request information for performing media source switching from a user equipment (2);
determining (S402), by the multimedia server (1), whether the request information is valid or not, wherein the determining whether the request information is valid or not comprises: determining whether a current session corresponding to the request information exists or not, and the request information is determined as valid if the current session exists;
stopping, by the multimedia server (1), playing back the current media source according to the request information, switching (S403), by the multimedia server (1), a current media source to a target media source requested by the user equipment (2) according to the request information, and delivering (S404) the target media source to the user equipment (2) through the current session and media communication channel resources, if the request information is valid;
returning (S405), by the multimedia server (1), the request information if the request information is invalid.

2. The fast switching method for media source according to claim 1, wherein the request information comprises an address or media flag of the target media source.

3. The fast switching method for media source according to claim 2, wherein the address or media flag of the target media source is carried by an operation flag header field of the request information, and the operation flag header field is generated by the user equipment (2) through a multimedia communication protocol.

4. The fast switching method for media source according to claim 1, wherein the determining whether the request information is valid or not comprises: determining whether the target media source requested to be switched to exists or not, and the request information is determined as valid if the target media source exists.

5. The fast switching method for media source according to claim 3, wherein the multimedia communication protocol at least comprises:
a real-time multimedia protocol, a session description protocol SDP, a session initiation protocol SIP, and a hypertext transfer protocol HTTP.

6. A fast switching system for media source, comprising a multimedia server (1) and a user equipment (2), wherein
the user equipment (2) is adapted to generate request information for performing media source switching and send the request information to the multimedia server (1); and
the multimedia server (1) is adapted to:
determine whether the request information is valid or not, wherein the determining whether the request information is valid or not comprises: determining whether a current session corresponding to the request information exists or not, and the request information is determined as valid if the current session exists;
stop playing back the current media source according to the request information, switch a current media source to a target media source requested by the user equipment (2) according to the request information, and deliver the target media source to the user equipment (2) through the current session and media communication channel resources, if the request information is valid;
return the request information if the request information is invalid.

7. The fast switching system for media source according to claim 6, wherein the user equipment (2) comprises a request generating module (21) and a request sending module (22);
the request generating module (21) is adapted to generate the request information for performing media source switching of the user equipment (2) by constructing an operation header field through a multimedia communication protocol; and
the request sending module (22) is adapted to send the request information generated by the request generating module (21) to the multimedia server (1).

8. The fast switching system for media source according to claim 6, wherein the multimedia server (1) comprises a request receiving module (11), a media source switching module (13), and a media source information delivering module (14);
the request receiving module (11) is adapted to receive the request information for performing media source switching from the user equipment (2);
the media source switching module (13) is adapted to switch a current media source to a target media source requested by the user equipment (2) according to the request information received by the request receiving module (11); and
the media source information delivering module (14) is adapted to deliver the target media source switched by the media source switching module (13) to the user equipment (2) through a current session and media communication channel resources.

9. The fast switching system for media source according to claim 8, wherein the multimedia server (1) further comprises: a request determining module (12), adapted to determine whether the request information received by the request receiving module (11) is valid or not, and notify the media source switching module (13) to perform media source switching after determining that the request information is valid.

10. A multimedia server, comprising a request receiving module (11), and a request determining module (12), a media source switching module (13), and a media source information delivering module (14), wherein
the request receiving module (11) is adapted to receive request information for performing media source switching from a user equipment (1);
the request determining module (12) is adapted to determine whether the request information received by the request receiving module (11) is valid or not, and notify the media source switching module (13) to perform media source switching after determining that the request information is valid, wherein the request determining module (12) comprises a current session determining sub-module (121), adapted to determine whether a current session corresponding to the request information exists or not, and the request information is determined as valid if the current session exists;
the media source switching module (13) is adapted stop playing back the current media source according to the request information and to switch a current media source to a target media source requested by the user equipment (2) according to the request information received by the request receiving module (11); and
the media source information delivering module (14) is adapted to deliver the target media source switched by the media source switching module (13) to the user equipment (2) through the current session and media communication channel resources.

11. The multimedia server according to claim 10, wherein the request determining module (12) comprises a target media source determining sub-module (122), adapted to determine whether the target media source requested to be switched to exists or not, and the request information is determined as valid if the target media source exists.

## Patentansprüche

1. Schnelles Umschaltverfahren für Medienquelle, umfassend:
Empfangen (S401) von Anforderungsinformationen zum Durchführen von Medienquellenumschaltung durch einen Multimediaserver (1) von einem Benutzergerät (2);
Bestimmen (S402) durch den Multimediaserver (1), ob die Anforderungsinformationen gültig sind oder nicht, wobei das Bestimmen, ob die Anforderungsinformationen gültig sind oder nicht, Folgendes umfasst: Bestimmen, ob eine den Anforderungsinformationen entsprechende aktuelle Sitzung existiert oder nicht, und die Anforderungsinformationen werden als gültig bestimmt, wenn die aktuelle Sitzung existiert;
Stoppen der Wiedergabe der aktuellen Medienquelle durch den Multimediaserver (1) gemäß den Anforderungsinformationen, Umschalten (S403) einer aktuellen Medienquelle durch den Multimediaserver (1) auf eine durch das Benutzergerät (2) angeforderte Zielmedienquelle gemäß den Anforderungsinformationen und Abliefern (S404) der Zielmedienquelle an das Benutzergerät (2) durch die aktuelle Sitzung und Medienkommunikationskanalbetriebsmittel, wenn die Anforderungsinformationen gültig sind; und
Zurückgeben (S405) der Anforderungsinformationen durch den Multimediaserver (1), wenn die Anforderungsinformationen ungültig sind.

2. Schnelles Umschaltverfahren für Medienquelle nach Anspruch 1, wobei die Anforderungsinformationen eine Adresse oder ein Medien-Flag der Zielmedienquelle umfassen.

3. Schnelles Umschaltverfahren für Medienquelle nach Anspruch 2, wobei die Adresse oder das Medien-Flag der Zielmedienquelle von einem Operationsflag-Kopffeld der Anforderungsinformationen geführt wird und das Operationsflag-Kopffeld durch das Benutzergerät (2) durch ein Multimedia-Kommunikationsprotokoll erzeugt wird.

4. Schnelles Umschaltverfahren für Medienquelle nach Anspruch 1, wobei das Bestimmen, ob die Anforderungsinformationen gültig sind oder nicht, Folgendes umfasst: Bestimmen, ob die Zielmedienquelle, auf die Umzuschalten angefordert wird, existiert oder nicht, und die Anforderungsinformationen als gültig bestimmt werden, wenn die Zielmedienquelle existiert.

5. Schnelles Umschaltverfahren für Medienquelle nach Anspruch 3, wobei das Multimedia-Kommunikationsprotokoll mindestens Folgendes umfasst:
ein Echtzeit-Multimedia-Protokoll, ein Session Description Protocol SDP, ein Session Initiation Protocol SIP und ein Hypertext Transfer Protocol HTTP.

6. Schnelles Umschaltsystem für Medienquelle, das einen Multimediaserver (1) und ein Benutzergerät (2) umfasst, wobei
das Benutzergerät (2) ausgelegt ist zum Erzeugen von Anforderungsinformationen zum Durchführen von Medienquellenumschaltung und Senden der Anforderungsinformationen zu dem Multimediaserver (1) und
der Multimediaserver (1) ausgelegt ist zum
Bestimmen, ob die Anforderungsinformationen gültig sind oder nicht, wobei das Bestimmen, ob die Anforderungsinformationen gültig sind oder nicht, Folgendes umfasst: Bestimmen, ob eine den Anforderungsinformationen entsprechende aktuelle Sitzung existiert oder nicht, und die Anforderungsinformationen werden als gültig bestimmt, wenn die aktuelle Sitzung existiert;
Stoppen der Wiedergabe der aktuellen Medienquelle gemäß den Anforderungsinformationen, Umschalten einer aktuellen Medienquelle auf eine durch das Benutzergerät (2) angeforderte Zielmedienquelle gemäß den Anforderungsinformationen und Abliefern der Zielmedienquelle an das Benutzergerät (2) durch die aktuelle Sitzung und Medienkommunikationskanalbetriebsmittel, wenn die Anforderungsinformationen gültig sind; und
Zurückgeben der Anforderungsinformationen, wenn die Anforderungsinformationen ungültig sind.

7. Schnelles Umschaltsystem für Medienquelle nach Anspruch 6, wobei das Benutzergerät (2) ein Anforderungserzeugungsmodul (21) und ein Anforderungssendemodul (22) umfasst;
wobei das Anforderungserzeugungsmodul (21) ausgelegt ist zum Erzeugen der Anforderungsinformationen zum Durchführen von Medienquellenumschaltung des Benutzergeräts (2) durch Konstruieren eines Operationskopffelds durch ein Multimedia-Kommunikationsprotokoll; und
das Anforderungssendemodul (22) ausgelegt ist zum Senden der durch das Anforderungserzeugungsmodul (21) erzeugten Anforderungsinformationen zu dem Multimediaserver (1).

8. Schnelles Umschaltsystem für Medienquelle nach Anspruch 6, wobei der Multimediaserver (1) ein Anforderungsempfangsmodul (11), ein Medienquellen-Umschaltmodul (13) und ein Medienquellen-Informationsablieferungsmodul (14) umfasst;
wobei das Anforderungsempfangsmodul (11) ausgelegt ist zum Empfangen der Anforderungsinformationen zum Durchführen von Medienquellenumschaltung von dem Benutzergerät (2);
das Medienquellen-Umschaltmodul (13) ausgelegt ist zum Umschalten einer aktuellen Medienquelle auf eine Zielmedienquelle, die durch das Benutzergerät (2) angefordert wird, gemäß dem durch das Anforderungsempfangsmodul (11) empfangenen Anforderungsinformationen; und
das Medienquellen-Informationsablieferungsmodul (14) ausgelegt ist zum Abliefern der durch das Medienquellen-Umschaltmodul (13) umgeschalteten Zielmedienquelle zu dem Benutzergerät (2) durch eine aktuelle Sitzung und Medienkommunikationskanalbetriebsmittel.

9. Schnelles Umschaltsystem für Medienquelle nach Anspruch 8, wobei der Multimediaserver (1) ferner Folgendes umfasst: ein Anforderungsbestimmungsmodul (12), ausgelegt zum Bestimmen, ob die durch das Anforderungsempfangsmmodul (11) empfangenen Anforderungsinformationen gültig sind oder nicht, und Benachrichtigen des Medienquellen-Umschaltmoduls (13), Medienquellenumschaltung durchzuführen, nachdem bestimmt wird, dass die Anforderungsinformationen gültig sind.

10. Multimediaserver, der ein Anforderungsempfangsmodul (11), ein Anforderungsbestimmungsmodul (12), ein Medienquellen-Umschaltmodul (13) und ein Medienquellen-Informationsablieferungsmodul (14) umfasst, wobei das Anforderungsempfangsmodul (11) ausgelegt ist zum Empfangen von Anforderungsinformationen zum Durchführen von Medienquellenumschaltung von einem Benutzergerät (2);
das Anforderungsbestimmungsmodul (12) ausgelegt ist zum Bestimmen, ob die durch das Anforderungsempfangsmodul (11) empfangenen Anforderungsinformationen gültig sind oder nicht, und Benachrichtigen des Medienquellen-Umschaltmoduls (13), Medienquellenumschaltung durchzuführen, nachdem bestimmt wird, dass die Anforderungsinformationen gültig sind, wobei das Anforderungsbestimmungsmodul (12) ein Submodul (121) zur Bestimmung der aktuellen Sitzung umfasst, ausgelegt zum Bestimmen, ob eine den Anforderungsinformationen entsprechende aktuelle Sitzung existiert oder nicht, und die Anforderungsinformationen als gültig bestimmt werden, wenn die aktuelle Sitzung existiert;
das Medienquellen-Umschaltmodul (13) ausgelegt ist zum Stoppen der Wiedergabe der aktuellen Medienquelle gemäß den Anforderungsinformationen und Umschalten einer aktuellen Medienquelle auf eine Zielmedienquelle, die durch das Benutzergerät (2) angefordert wird, gemäß den durch das Anforderungsempfangsmodul (11) empfangenen Anforderungsinformationen; und
das Medienquellen-Informationsablieferungsmodul (14) ausgelegt ist zum Abliefern der durch das Medienquellen-Umschaltmodul (13) umgeschalteten Zielmedienquelle zu dem Benutzergerät (2) durch die aktuelle Sitzung und Medienkommunikationskanalbetriebsmittel.

11. Multimediaserver nach Anspruch 10, wobei das Anforderungsbestimmungsmodul (12) ein Submodul (122) zum Bestimmen der Zielmedienquelle umfasst, ausgelegt zum Bestimmen, ob die Zielmedienquelle, auf die Umzuschalten angefordert wird, existiert oder nicht, und die Anforderungsinformationen als gültig bestimmt werden, wenn die Zielmedienquelle existiert.

## Revendications

1. Procédé de commutation rapide pour une source de média, comprenant les étapes suivantes :
recevoir (S401), par l'intermédiaire d'un serveur multimédia (1), des informations de demande pour exécuter une commutation de source de média à partir d'un équipement d'utilisateur (2) ;
déterminer (S402), par l'intermédiaire du serveur multimédia (1), si les informations de demande sont valides ou non, où la détermination comprenant de savoir si les informations de demande sont valides ou non comprend l'étape suivante : déterminer si une session en cours correspondant aux informations de demande existe ou non, et
les informations de demande sont déterminées comme valides si la session en cours existe ;
arrêter, par l'intermédiaire du serveur multimédia (1), la lecture dé la source de média en cours conformément aux informations de demande, commuter (S403), par l'intermédiaire du serveur multimédia (1), une source de média en cours vers une source de média cible demandée par l'équipement d'utilisateur (2) conformément aux informations de demande, et délivrer (S404) la source de média cible à l'équipement d'utilisateur (2) par l'intermédiaire de la session en cours et des ressources de canal de communication de média, si les informations de demande sont valides ;
retourner (S405), par l'intermédiaire du serveur multimédia (1), les informations de demande si les informations de demande ne sont pas valides.

2. Procédé de commutation rapide pour une source de média selon la revendication 1, dans lequel les informations de demande comprennent une adresse ou un indicateur de média de la source de média cible.

3. Procédé de commutation rapide pour une source de média selon la revendication 2, dans lequel l'adresse ou l'indicateur de média de la source de média cible est acheminé(e) par un champ d'en-tête d'indicateur d'opération des informations de demande, et le champ d'en-tête d'indicateur d'opération est généré par l'équipement d'utilisateur (2) par l'intermédiaire d'un protocole de communication multimédia.

4. Procédé de commutation rapide pour une source de média selon la revendication 1, dans lequel la détermination comprenant de savoir si les informations de demande sont valides ou non comprend l'étape suivante : déterminer si la source de média cible demandée pour être commutée existe ou non, et les informations de demande sont déterminées comme valides si la source de média cible existe.

5. Procédé de commutation rapide pour une source de média selon la revendication 3, dans lequel le protocole de communication multimédia comprend au moins :
un protocole de multimédia en temps réel, un protocole de description de session, SDP, un protocole d'initiation de session, SIP, et un protocole de transfert hypertexte, HTTP.

6. Système de commutation rapide pour une source de média, comprenant un serveur multimédia (1) et un équipement d'utilisateur (2), dans lequel :
l'équipement d'utilisateur (2) est conçu pour générer des informations de demande pour exécuter une commutation de source de média et envoyer les informations de demande au serveur multimédia (1) ; et
le serveur multimédia (1) est conçu pour :
déterminer si les informations de demande sont valides ou non, où la détermination comprenant de savoir si les informations de demande sont valides ou non comprend l'étape suivante : déterminer si une session en cours correspondant aux informations de demande existe ou non, et les informations de demande sont déterminées comme valides si la session en cours existe ;
arrêter la lecture de la source de média en cours conformément aux informations de demande, commuter une source de média en cours vers une source de média cible demandée par l'équipement d'utilisateur (2) conformément aux informations de demande, et délivrer la source de média cible à l'équipement d'utilisateur (2) par l'intermédiaire de la session en cours et aux ressources de canal de communication de média, si les informations de demande sont valides ;
retourner les informations de demande si les informations de demande ne sont pas valides.

7. Système de commutation rapide pour une source de média selon la revendication 6, dans lequel l'équipement d'utilisateur (2) comprend un module de génération de demande (21) et un module d'envoi de demande (22) ;
le module de génération de demande (21) est conçu pour générer les informations de demande pour exécuter une commutation de source de média de l'équipement d'utilisateur (2) en établissant un champ d'en-tête d'opération par l'intermédiaire d'un protocole de communication multimédia ; et
le module d'envoi de demande (22) est conçu pour envoyer les informations de demande générées par le module de génération de demande (21) vers le serveur multimédia (1).

8. Système de commutation rapide pour une source de média selon la revendication 6, dans lequel le serveur multimédia (1) comprend un module de réception de demande (11), un module de commutation de source de média (13), et un module de délivrance d'informations de source de média (14) ;
le module de réception de demande (11) est conçu pour recevoir les informations de demande pour exécuter une commutation de source de média à partir de l'équipement d'utilisateur (2) ;
le module de commutation de source de média (13) est conçu pour commuter une source de média en cours vers une source de média cible demandée par l'équipement d'utilisateur (2), conformément aux informations de demande reçues par le module de réception de demande (11) ; et
le module de délivrance d'informations de source de média (14) est conçu pour délivrer la source de média cible commutée par le module de commutation de source de média (13) à l'équipement d'utilisateur (2) par l'intermédiaire d'une session en cours et de ressources de canal de communication de média.

9. Système de commutation rapide pour une source de média selon la revendication 8, dans lequel le serveur multimédia (1) comprend en outre : un module de détermination de demande (12), conçu pour déterminer si les informations de demande reçues par le module de réception de demande (11) sont valides ou non, et pour notifier au module de commutation de source de média (13) d'exécuter une commutation de source de média après avoir déterminé que les informations de demande sont valides.

10. Serveur multimédia, comprenant un module de réception de demande (11), et un module de détermination de demande (12), un module de commutation de source de média (13), et un module de délivrance d'informations de source de média (14), dans lequel :
le module de réception de demande (11) est conçu pour recevoir des informations de demande pour exécuter une commutation de source de média à partir d'un équipement d'utilisateur (2) ;
le module de détermination de demande (12) est conçu pour déterminer si les informations de demande reçues par le module de réception de demande (11) sont valides ou non, et pour notifier au module de commutation de source de média (13) d'exécuter une commutation de source de média après avoir déterminé que les informations de demande sont valides, où le module de détermination de demande (12) comprend un sous-module de détermination de session en cours (121), conçu pour déterminer si une session en cours correspondant aux informations de demande existe ou non, et les informations de demande sont déterminées comme valides si la session en cours existe ;
le module de commutation de source de média (13) est conçu pour arrêter la lecture de la source de média en cours, conformément aux informations de demande, et pour commuter une source de média en cours vers une source de média cible demandée par l'équipement d'utilisateur (2), conformément aux informations de demande reçues par le module de réception de demande (11) ; et
le module de délivrance d'informations de source de média (14) est conçu pour délivrer la source de média cible commutée par le module de commutation de source de média (13) à l'équipement d'utilisateur (2) par l'intermédiaire d'une session en cours et de ressources de canal de communication de média.

11. Serveur multimédia selon la revendication 10, dans lequel le module de détermination de demande (12) comprend un sous-module de détermination de source de média cible (122), conçu pour déterminer si la source de média cible demandée pour être commutée existe ou non, et les informations de demande sont déterminées comme valides si la source de média cible existe.
